# EUROPEAN PATENT APPLICATION

(11) **EP 2 693 848 A1**
(43) Date of publication of application: **05.02.2014**
(21) Application number: 11862566.4
(22) Date of filing: 26.12.2011
(51) Int. Cl.: H05G 2/00, H05G 1/00, H05H 9/00

(54) **X-RAY GENERATING APPARATUS AND METHOD OF CONTROLLING X-RAY GENERATING APPARATUS**

(30) Priority: 29.03.2011 JP 2011073600
(71) Applicant: Mitsubishi Heavy Industries, Ltd., Tokyo 108-8215 (JP)
(72) Inventor: AOI, Tatsufumi, Tokyo 108-8215 (JP); KAMINO, Yuichiro, Tokyo 108-8215 (JP); OGI, Yasuo, Tokyo 108-8215 (JP); WATANABE, Akira, Tokyo 108-8215 (JP); SHIGEOKA, Nobuyuki, Tokyo 108-8215 (JP)
(74) Representative: HOFFMANN EITLE
(86) International application number: PCT/JP2011/080120
(87) International publication number: WO 2012/132156

(57) **Abstract**

An object is to emit x-rays having a plurality of different energies and to suppress variations in the energy of the created x-rays. In an x-ray generating apparatus (14) provided in an x-ray inspection apparatus (10), a particle accelerator (20) creates a charged particle beam for generating x-rays having a plurality of different energies, and x-rays are emitted by irradiating a target (22) with the charged particle beam. A single-energy control device (40) controls the particle accelerator (20) for each of the x-rays having different energies on the basis of an x-ray radiation level per unit target current obtained from a measured value of the current flowing in the target (22) and a measured value of the radiation level of x-rays emitted from the target (22), when the target (22) is irradiated with the charged particle beam.

## Description

### {Technical Field}

The present invention relates to an x-ray generating apparatus and a control method for an x-ray generating apparatus.

### {Background Art}

In the related art, X-ray generating apparatuses that emit X-rays by irradiating a target made of a heavy metal, such as molybdenum or tungsten, with a charged particle beam generated by a particle accelerator have been developed. The x-rays generated by such x-ray generating apparatuses are used in diagnostic imaging and tomographic imaging for medical and nondestructive inspection, in diffraction for investigating crystal structures, and so forth.

More concretely, for example, as an x-ray inspection apparatus for inspecting contraband or suspicious items (objects under inspection), such as explosives, during import and export by using x-rays, in order to perform inspection suitable for the compositions of various materials, an x-ray inspection apparatus using an x-ray generating apparatus that emits x-rays having a plurality of different energies has been proposed. Such inspection apparatuses use x-rays of comparatively low energy (about 500 keV or less) to inspect highly transmissive materials having low atomic number and low density (for example, plastics etc.), and use high-energy x-rays (about 5 to 10 MeV) generated by photo-neutrons (photoneutrons) to inspect materials having high atomic number (for example, nuclear materials, etc.).

Patent Literature 1 discloses a linear accelerator that creates x-rays having a plurality of different energies and that is capable of pulse switching for distributing RF energy to be supplied to an accelerator tube connected in series therewith for accelerating electrons, by means of a power divider and a phase shifter that can be switched at high speed.

### {Citation List}

### {Patent Literature}

{PTL 1}
US Patent Application No. 2008/0211431

### {Summary of Invention}

### {Technical Problem}

However, although the linear accelerator disclosed in Patent Literature 1 can create x-rays having a plurality of different energies, it cannot create x-rays having temporally stable energies. Consequently, the energy spectrum of the emitted x-rays is a broad spectrum; that is to say, some variation occurs in the energies of the created x-rays. When variation occurs in the x-ray energies, there is a possibility of reduced inspection precision of the object under inspection.

The present invention has been conceived in light of the above circumstances, and an object thereof is to provide an x-ray generating apparatus and an x-ray generating apparatus control method with which it is possible to emit x-rays having a plurality of different energies while suppressing variations in the energies of the created x-rays.

### {Solution to Problem}

In order to solve the above-mentioned problem, the x-ray generating apparatus and x-ray generating apparatus control method of the present invention employ the following solutions.

Specifically, an x-ray generating apparatus according to a first aspect of the present invention is an x-ray generating apparatus for irradiating an object under inspection with x-rays, including a particle accelerator that creates a charged particle beam for generating x-rays having a plurality of different energies; a target that emits x-rays by being irradiated with the charged particle beam; a current measuring means for measuring a current flowing in the target when the target is irradiated with the charged particle beam; a radiation-level measuring means for measuring a radiation level of the x-rays emitted from the target when the target is irradiated with the charged particle beam; and a control means for controlling the particle accelerator for each of the x-rays having different energies, based on an x-ray radiation level per unit current obtained from a measurement value measured by the current measuring means and a measurement value measured by the radiation-level measuring means.

With the first aspect of the present invention, in the x-ray generating apparatus for irradiating the object under inspection with x-rays, the charged particle beam for generating x-rays having a plurality of different energies is created by the particle accelerator, and the target is irradiated with the charged particle beam, thereby emitting x-rays.

By inspecting the object under inspection with x-rays having a plurality of different energies, it becomes possible to realize inspection suitable for the composition of the various substances composing the object under inspection.

Also, the current flowing in the target when the target is irradiated with the charged particle beam is measured with the current measuring means, and the radiation level of x-rays emitted from the target when the target is irradiated with the charged particle beam is measured with the radiation-level measuring means.

Then, the particle accelerator is controlled by the control means for each of the x-rays having different energies on the basis of the x-ray radiation level per unit current obtained from the measurement value measured with the current measuring means and the measurement value measured with the radiation-level measuring means.

In this way, by controlling the particle accelerator with the x-ray radiation level per unit current obtained from the current value flowing in the target and the x-ray radiation level serving as the desired level, that is to say, so that the x-ray radiation level per unit current becomes constant, it is possible to obtain the desired x-ray energy with high precision even when the x-ray energy is switched. Thus, the present invention can emit x-rays having a plurality of different energies, while suppressing variations in the energy of the created x-rays.

In the x-ray generating apparatus according to the first aspect of the present invention, the object under inspection may be repeatedly irradiated with the x-rays having a plurality of different energies periodically at prescribed time intervals.

With the first aspect of the present invention, it is possible to evaluate temporal changes in the object under inspection with high precision.

The x-ray generating apparatus according to the first aspect of the present invention may further comprise an openable and closable shutter that blocks x-rays emitted from the target and radiated towards the object under inspection, wherein the shutter is opened when the x-ray radiation level per unit current falls within a prescribed range including a desired value that is set in advance.

With the first aspect of the present invention, it is possible to prevent the object under inspection from being irradiated with x-rays whose energies do not stably fall within a fixed range, and therefore, it is possible to increase the inspection precision of the object under inspection.

In the x-ray generating apparatus according to the first aspect of the present invention, when the x-ray radiation level per unit current falls within a prescribed range including a desired value that is set in advance, inspection of the object under inspection may be performed using the x-rays.

With the first aspect of the present invention, it is possible to prevent the object under inspection from being inspected with x-rays whose energies do not stably fall within a fixed range, and therefore, it is possible to increase the inspection precision of the object under inspection. Inspection here includes inspection by measuring x-rays transmitted through or scattered in the object under inspection, and inspection by measuring neutrons ejected by irradiating the object under inspection with x-rays.

In the x-ray generating apparatus according to the first aspect of the present invention, the desired value and the prescribed range can be set for each of the x-rays having a plurality of different energies.

With the first aspect of the present invention, the desired value of the x-ray radiation level per unit current and the range of the desired value can be set for each of the x-rays having the plurality of different energies; therefore, it is possible to adjust the precision thereof for each of the x-ray energies, which improves the controllability degree of freedom of the x-ray generating apparatus.

In the x-ray generating apparatus according to the first aspect of the present invention, the desired value, the prescribed range, and a period, in a case where the object under inspection is repeatedly inspected, can be set according to the object under inspection.

With the first aspect of the present invention, because the desired value of the x-ray radiation level per unit current, the range of the desired value, and the period in the case where the object under inspection is repeatedly inspected can be set according to the object under inspection, it is possible to inspect the object under inspection with high precision.

The x-ray generating apparatus according to the first aspect of the present invention, may have a configuration in which the control device feedback-controls the particle accelerator on the basis of the x-ray radiation level per unit current.

With the above configuration, because the particle accelerator is feedback controlled on the basis of the x-ray radiation level per unit current, it is possible to suppress variations in the energy of the created x-rays.

In the above-described configurations, the feedback control may be performed continuously or at prescribed time intervals.

Accordingly, because the feedback control is performed continuously or at prescribed time intervals, it is possible to suppress variations in the energy of the created x-rays caused by a continuous long usage time of the particle accelerator.

In the x-ray generating apparatus according to the first aspect of the present invention, a plurality of the control devices may be provided in correspondence with the x-rays having a plurality of different energies and may be switched according to the x-ray energy.

With the first aspect of the present invention, because the control device is switched according to the x-rays having a plurality of different energies, appropriate x-ray energy control depending on the x-ray energy is possible.

A x-ray generating apparatus control method according to a second aspect of the present invention is a control method for an x-ray generating apparatus that irradiates an object under inspection with x-rays, provided with a particle accelerator that creates a charged particle beam for generating x-rays having a plurality of different energies and a target that emits x-rays when irradiated with the charged particle beam, the control method including: controlling the particle accelerator for each of the x-rays having different energies on the basis of an x-ray radiation level per unit current, obtained from a measured value of the current flowing in the target and a measured value of the radiation level of x-rays emitted from the target, when the target is irradiated with the charged particle beam.

### {Advantageous Effects of Invention}

The present invention affords the excellent advantage that it is possible to emit x-rays having a plurality of different energies while suppressing variations in the energies of the created x-rays.

### {Brief Description of Drawings}

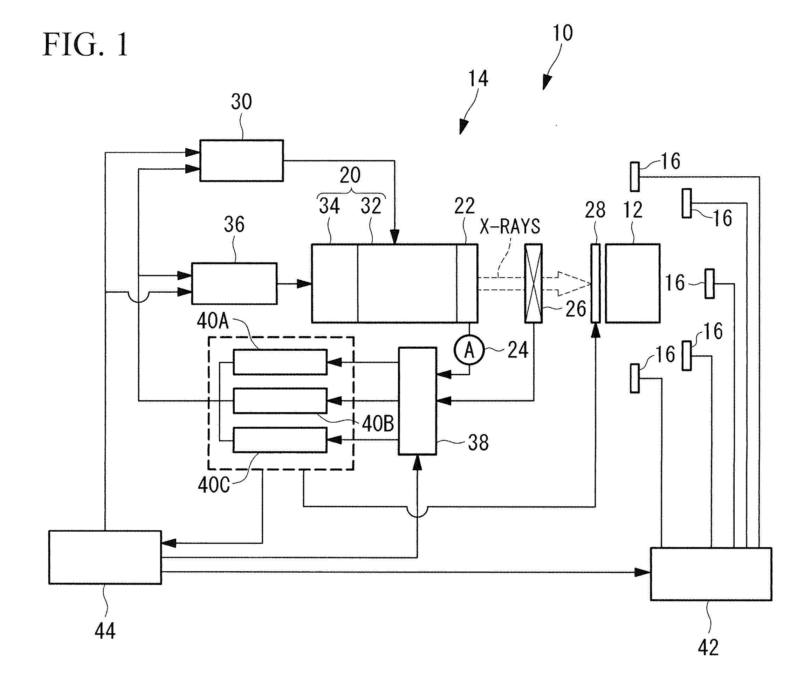

{Fig. 1}
   Fig. 1 is a diagram showing the configuration of an x-ray inspection apparatus according to a first embodiment of the present invention.
{Fig. 2}
   Fig. 2 is a flowchart showing the flow of x-ray inspection processing according to the first embodiment of the present invention.
{Fig. 3}
   Fig. 3 is an example of an x-ray spectrum measured with the x-ray inspection apparatus according to the first embodiment of the present invention.
{Fig. 4}
   Fig. 4 is an example of an x-ray spectrum for a case where the energy precision is varied, for x-rays having a plurality of different energies, according to the first embodiment of the present invention.
{Fig. 5}
   Fig. 5 is an example of repeated irradiation with pulsed x-rays according to the first embodiment of the present invention.
{Fig. 6}
   Fig. 6 is a flowchart showing the flow of x-ray inspection processing according to a second embodiment of the present invention.
{Fig. 7}
   Fig. 7 is a diagram showing the configuration of an x-ray inspection apparatus according to a third embodiment of the present invention.

### {Description of Embodiments}

Embodiments of an x-ray generating apparatus and a control method for an x-ray generating apparatus according to the present invention will be described below with reference to the drawings.

### First Embodiment

A first embodiment of the present invention will be described below.

Fig. 1 is a diagram showing the configuration of an x-ray inspection apparatus 10 according to the first embodiment.

The x-ray inspection apparatus 10 according to the first embodiment includes an x-ray generating apparatus 14 that irradiates an object under inspection 12 with x-rays and radiation measuring units 16 that measure x-rays passing through and scattered in the object under inspection 12 and neutrons (photo-neutrons) ejected by irradiating the object under inspection 12 with x-rays, thus inspecting the object under inspection 12. Photo-neutrons are neutrons ejected by a photonuclear reaction between atoms and high-energy x-rays.

The object under inspection 12 is not particularly limited and may be, for example, a living organism or luggage transported by air. In addition, the size of the object under inspection 12 is not particularly limited; in the case of luggage, for example, it may range from the size of hand luggage to about the size of a container.

In the first embodiment, it is assumed that the object under inspection 12 is irradiated with x-rays and inspected while being moved by a conveyor belt.

The x-ray generating apparatus 14 includes a particle accelerator 20 (in the first embodiment, a linear accelerator) that creates a charged particle beam for generating x-rays having a plurality of different energies, a target 22 that emits x-rays when irradiated with the charged particle beam, a current measuring unit 24 that measures the current flowing in the target 22 due to the target 22 being irradiated with the charged particle beam, a radiation-level measuring unit 26 that measures the radiation level of x-rays emitted from the target 22 due to the target 22 being irradiated with the charged particle beam, and an x-ray shutter 28 that can be opened/closed to block x-rays emitted from the target 22 and radiated towards the object under inspection 12.

In the particle accelerator 20, electromagnetic waves are supplied from an accelerator-tube power supply 30 to a charged-particle accelerator tube 32 via a circulator (not illustrated) and a waveguide tube (not illustrated), thereby accelerating charged particles created by a charged particle source 34. When an RF accelerator tube is used as the charged-particle accelerator tube 32, a klystron, a magnetron, or the like is used as the accelerator-tube power supply 30.

Electrons, negatively charged particles (for example, carbon) such as negative ions, or positively charged particles (for example, protons) such as positive ions are used as the charged particles. The x-ray generating apparatus 14 includes a particle-beam-source power supply 36 for creating the charged particles.

If the charged particles are electrons, the particle-beam-source power supply 36 is used as a power supply for heating a filament or as a power supply for applying a voltage to an electrode for extracting an electron beam, and if the charged particles are negative ions or positive ions, the particle-beam-source power supply 36 is used as a power supply for forming a plasma from an ionized gas and so forth or as a power supply for applying a voltage to an electrode for extracting an ion beam.

In the particle accelerator 20 according to this embodiment, as one example, it is assumed that the charged particle beam is an electron beam.

The x-ray generating apparatus 14 also includes an energy switching device 38 and single-energy control devices 40A, 40B, and 40C.

The energy switching device 38 transmits to the single-energy control devices 40A, 40B, and 40C switching instruction signals for switching the energy of the charged particle beam, according to the energy of the x-rays to be generated. As an example, the x-ray generating apparatus 14 according to the first embodiment generates x-rays having three energies (in the first embodiment, 0.5 MeV, 6 MeV, and 9 MeV). Because of this, the single-energy control devices 40A, 40B, and 40C are designed for 0.5 MeV, 6 MeV, and 9 MeV, respectively. In this way, the x-ray generating apparatus 14 can selectively irradiate the object under inspection 12 with low-energy to high-energy x-rays; therefore, materials ranging from highly transmissive materials having low atomic number and low density, such as plastics, to materials having high atomic number, such as nuclear materials like uranium and plutonium, can be distinguished using x-rays.

In the following description, in cases where the individual single-energy control devices 40 should be distinguished, letters A and B are appended to the reference sign, and in cases where the individual single-energy control devices 40 do not need to be distinguished, letters A and B are omitted.

In response to the switching instruction signals received from the energy switching device 38, the single-energy control devices 40 control the particle accelerator 20 by controlling the electrical power output from the accelerator-tube power supply 30 and the particle-beam-source power supply 36. Also, the single-energy control devices 40A, 40B, and 40C perform on/off control of the x-ray shutter 28.

The target 22 is made of a heavy metal, for example, molybdenum, tungsten, or the like, and the radiation-level measuring unit 26 is, for example, a transmissive-type radiation meter.

A plurality of the radiation measuring units 16 are disposed around the object under inspection 12 and are measuring devices that measure x-rays or neutrons. Measurement data showing the measurement results obtained by the radiation measuring units 16 is transmitted to diagnostic equipment 42.

Based on the measurement data transmitted from the radiation measuring units 16, the diagnostic equipment 42 performs inspection evaluation, such as identification of the composition of the object under inspection 12, evaluation of the temporal changes and spatial distribution of the object under inspection 12, and so on.

The x-ray inspection apparatus 10 is provided with a controller 44 that performs overall control of the x-ray inspection apparatus 10. The controller 44 controls the starting and stopping of the accelerator-tube power supply 30, the particle-beam-source power supply 36, and the diagnostic equipment 42, and also sends a signal indicating the energy of x-rays to be generated by the x-ray generating apparatus 14 to the energy switching device 38. The controller 44 also receives information indicating the control status of the particle accelerator 20 from the single-energy control devices 40.

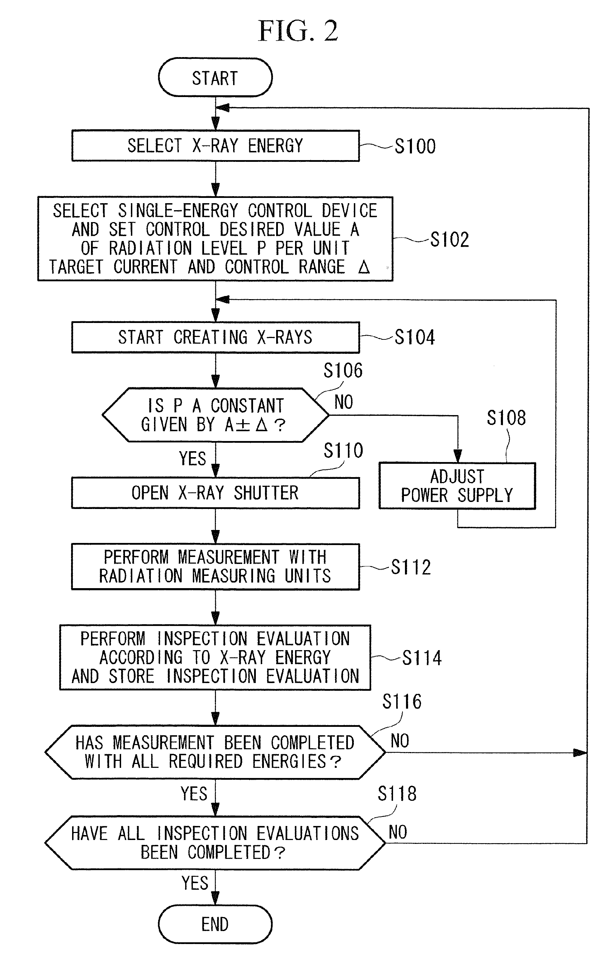

Fig. 2 is a flowchart (control algorithm) showing the flow of x-ray inspection processing according to the first embodiment.

First, in step 100, the energy of the x-rays with which the object under inspection 12 is to be irradiated is selected by the controller 44.

Next, in step 102, according to the x-ray energy selected by the energy switching device 38, one of the single-energy control devices 40A, 40B, and 40C is selected. In conjunction with this, a control desired value A of the x-ray radiation level P per unit target current and a control range Δ of the control desired value A obtained from the measurement value measured by the current measuring unit 24 (hereinafter referred to as "target current value") and the measurement value measured by the radiation-level measuring unit 26 (hereinafter referred to as "radiation level value") are set for each x-ray energy.

Regarding the control desired value A, the efficiency of conversion from an electron beam to x-rays tends to increase as, for example, the x-ray energy increases and as the atomic number of the metal target substance becomes higher; therefore, the control desired value A is set so as to increase. Regarding the control range Δ, on the other hand, as the control range Δ decreases, the fluctuation in the energy of the generated x-rays decreases, which can improve the precision of the x-ray energy.

In addition, the control desired value A and the control range Δ can also be set according to the object under inspection 12. For example, the control desired value A and the control range Δ can be set according to the atomic mass number and density of the object under inspection 12, the spatial resolution, the density (mass) resolution, the moving speed of the conveyor belt, and inspection processing frequency, and so forth. In more detail, when roughly analyzing the atomic number and density of the substance constituting the object under inspection 12, or when inspecting a large number of objects under inspection 12 moving at high speed, the control range Δ is set to a large value. Conversely, when performing more precise analysis of the atomic number and density of the substance constituting the object under inspection 12, the control range Δ is set to a small value.

The control desired value A and the control range Δ may be set to values input by the operator of the x-ray inspection apparatus 10, or they may be set by reading out a pre-stored control desired value A and control range Δ.

In step 104, when outputting of electrical power (voltage and current) from the accelerator-tube power supply 30 and the particle-beam-source power supply 36 is started by the controller 44, charged particles are accelerated, and the creation of x-rays by the x-ray generating apparatus 14 is started. At step 104, the x-ray shutter 28 is still closed, and therefore, the x-rays emitted from the target 22 do not irradiate the object under inspection 12.

In step 106, it is determined whether or not the x-ray radiation level P per unit target current takes a constant value given by control desired value A ± control range Δ, and if the determination is affirmative, the process proceeds to step 110.

If, on the other hand, the determination in step 106 is negative, the process proceeds to step 108, where the electrical powers output by the accelerator-tube power supply 30 and the particle-beam-source power supply 36 are controlled by the single-energy control devices 40 so that the x-ray radiation level P per unit target current becomes a constant given by control desired value A ± control range Δ. In other words, the particle accelerator 20 is feedback controlled based on the x-ray radiation level P per unit target current.

By transmitting the measurement data indicating the target current value measured in the target 22 and the radiation level value measured by the radiation-level measuring unit 26 to the single-energy control devices 40 via the energy switching device 38, it is determined by the single-energy control devices 40 whether or not the x-ray radiation level P per unit target current takes a constant given by control desired value A ± control range Δ.

The methods described in (1) to (3) below can be used for the feedback control of the accelerator-tube power supply 30 for ensuring that the x-ray radiation level P per unit target current, which is the controlled quantity, becomes a constant given by control desired value A ± control range Δ.
(1) Feedback control the RF power supply, such as a klystron, to update the output power of high-frequency power pulses supplied to the charged-particle accelerator tube 32.
(2) Feedback control the RF power supply, such as a klystron, to update the pulse width of high-frequency power pulses supplied to the charged-particle accelerator tube 32.
(3) Feedback control the RF power supply, such as a klystron, to update both the output power and the pulse width of high-frequency power pulses supplied to the charged-particle accelerator tube 32.

In addition, the methods described in (4) to (6) below can be used for the feedback control of the particle-beam-source power supply 36 (in the first embodiment, the particle beam source is an electron gun) for ensuring that the x-ray radiation level P per unit target current, which is the controlled quantity, becomes a constant given by control desired value A ± control range Δ.
(4) Update the electrical power supplied to the cathode of the electron gun.
(5) Update the voltage applied to the grid of the electron gun.
(6) Update both the electrical power supplied to the cathode of the electron gun and the voltage applied to the grid.

On the other hand, when the particle beam source is an ion source, the methods described in (7) to (9) below can be used.
(7) Update the electrical power supplied to a discharge-plasma-generating power supply of the ion source.
(8) Update the voltage applied to the grid of the ion source.
(9) Update both the electrical power supplied to the discharge-plasma-generating power supply of the ion source and the voltage applied to the grid.

If the x-ray generating apparatus were not provided with the energy switching device 38 and the single-energy control devices 40, the energy imparted to the charged particles by the particle accelerator would be adjusted by adjusting the power distribution of the applied RF power by using a power divider or phase shifter, or alternatively, generated by combining a plurality of charged-particle accelerator tubes or generated by filtering one part, therefore making it difficult to control the particle accelerator appropriate for each x-ray energy, in other words, to control the x-ray energy.

However, as in the x-ray generating apparatus 14 according to the first embodiment, by providing the energy switching device 38, a single-energy control device 40 can be selected for each x-ray energy, and x-ray energy control appropriate for each selected x-ray energy becomes possible.

In step 110, by opening the x-ray shutter 28, the object under inspection 12 is irradiated with x-rays.

In this way, by opening the x-ray shutter 28 to irradiate the object under inspection 12 with x-rays after performing control so that the x-ray radiation level P per unit target current becomes a constant given by control desired value A ± control range Δ, it is possible to prevent the object under inspection 12 from being irradiated with x-rays whose energy does not stably fall within a fixed range; therefore, it is possible to increase the inspection precision of the object under inspection 12.

Next, in step 112, measurement is performed by the radiation measuring units 16.

In this way, by performing measurement with the radiation measuring units 16 after performing control so that the x-ray radiation level P per unit target current becomes a constant given by control desired value A ± control range Δ, it is possible to prevent the object under inspection 12 from being inspected with x-rays whose energy does not stably fall within a fixed range; therefore, it is possible to increase the inspection precision of the object under inspection 12.

In step 114, the measurement data measured by the radiation measuring units 16 is transmitted to the diagnostic equipment 42, inspection evaluation according to the x-ray energy is performed by the diagnostic equipment 42, and the inspection evaluation results are stored.

Next, in step 116, it is determined whether or not measurement has been completed for all required energies (0.5 MeV, 6 MeV, and 9 MeV); if an affirmative determination is made, the process proceeds to step 118, and if a negative determination is made, the process returns to step 100, where an x-ray energy that has not yet been used is newly selected.

Next, in step 118, it is determined whether or not all inspection evaluations have been completed; if an affirmative determination is made, this process is completed, and if a negative determination is made, the process returns to step 100, where an x-ray energy for performing an evaluation that has not yet been executed is newly selected.

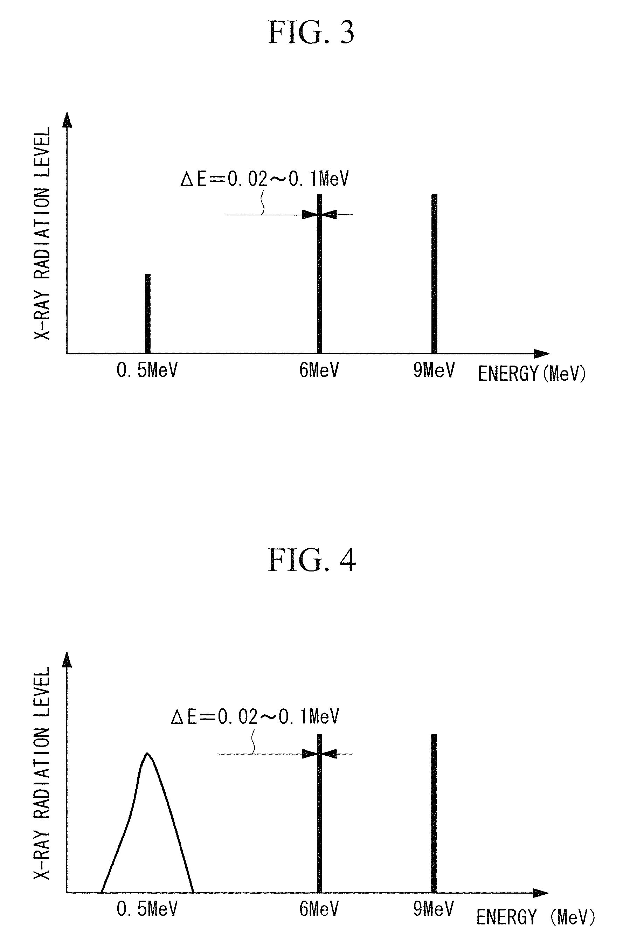

Fig. 3 is an example of an x-ray spectrum measured with the x-ray inspection apparatus according to the first embodiment. In Fig. 3, the x-ray energy is shown on the horizontal axis, and the x-ray radiation level is shown on the vertical axis.

As shown in Fig. 3, by controlling the particle accelerator 20 so that the x-ray radiation level P per unit target current for each x-ray energy takes a constant value given by control desired value A ± control range Δ, for example, the spectral width of the x-rays was 0.02 to 0.1 MeV, the variation in the x-ray energy was suppressed, and therefore it was possible to stably control the energy with high precision.

In addition, since the x-ray generating apparatus 14 according to this first embodiment is provided with the energy switching device 38 and the single-energy control devices 40 for controlling each x-ray energy, x-rays for which high energy precision is required (for example, 6 MeV and 9 Mev) and x-rays that need not have high energy precision (for example, 0.5 MeV) can be properly used according to, for example, the object under inspection 12, the frequency of inspection, and so on. To properly use the appropriate x-rays in this manner, for an x-ray energy where high precision is required, the control range Δ is set to a small value, and for an x-ray energy where the precision does not need to be high, the control range Δ is set to a large value.

Fig. 4 is an example of an x-ray spectrum in the case where the energy precisions differ for x-rays having a plurality of different energies. Fig. 4 is an example in which the x-rays having an energy of 0.5 MeV are generated with a smaller control range Δ compared with the x-rays having the other energies. By doing so, the x-ray generating apparatus 14 according to the first embodiment can prioritize only the required control, thus improving the controllability degree of freedom.

With the x-ray inspection apparatus 10 according to the first embodiment, the object under inspection 12 is repeatedly irradiated with x-rays having a plurality of different energies periodically at prescribed time intervals; that is to say, the object under inspection 12 is repeatedly irradiated in a pulsed fashion with x-rays having a plurality of different energies.

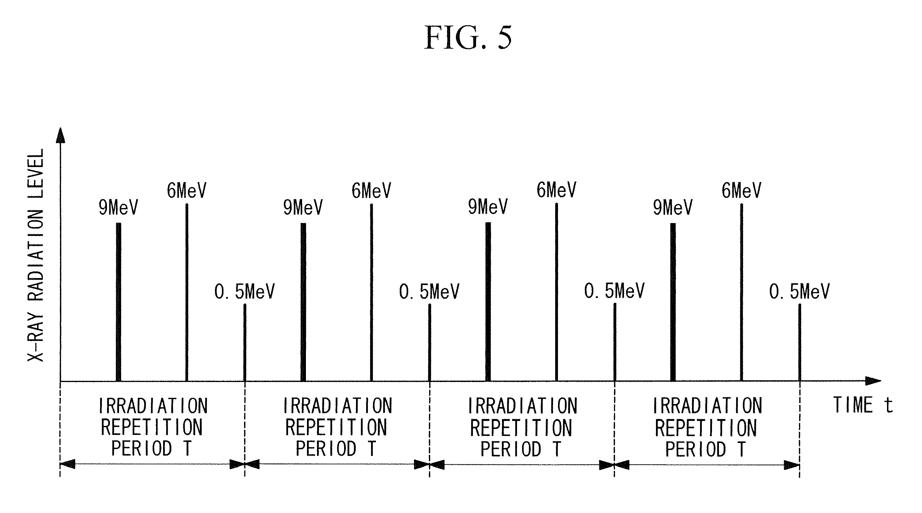

Fig. 5 shows an example of repeated irradiation with pulsed x-rays. The time interval between each x-ray pulse is, for example, about several tens to several hundreds of ms, and the irradiation repetition period T is several hundreds of ms to a few seconds. By periodically performing repeated irradiation with pulsed x-rays of each energy in this way, it is possible to evaluate temporal changes in the object under inspection 12.

As described above, the x-ray generating apparatus 14 according to the first embodiment can suppress variations in the x-ray energy even when switching the x-ray energy; therefore, evaluation of temporal changes in the object under inspection 12 due to repeated irradiation with pulsed x-rays can be performed with high precision.

Furthermore, the irradiation repetition period T can be set depending on the object under inspection 12. For example, when the moving speed of the object under inspection 12 is high, processing must be carried out in a short time, and therefore, the irradiation repetition period T is set to be short. On the other hand, when the moving speed of the object under inspection 12 is low, processing must be carried out in a long time, and therefore, the irradiation repetition period T is set to be long. The longer the irradiation repetition period T is, the higher the inspection precision is, and therefore, the irradiation repetition period T may also be set long for a highly important object under inspection 12.

In addition, when the frequency of inspection processing of the object under inspection 12 is short, processing must be carried out in a short time, and therefore, the repetition period T is set to be short; and when the frequency of inspection processing of the object under inspection is long, processing must be carried out for a long time, and therefore, the repetition period T is set to be long.

With the x-ray generating apparatus 14, particularly the particle accelerator 20, in some cases the energy of the charged particle beam varies due to, for example, a long continuous usage time. The reason for this is that the distance between the electrodes used for accelerating the charged particles changes due to, for example, expansion by the heat which they generate. In such cases, there is a possibility of a deviation occurring in the energy of the created x-rays. Furthermore, there is a possibility of a deviation occurring in the energy of the created x-rays due to other factors.

Therefore, the above-described feedback control may be performed continuously or at prescribed time intervals, not just before commencing inspection of the object under inspection 12. By doing so, even while the object under inspection 12 is being irradiated with x-rays, it is possible to ensure that the x-ray radiation level P per unit target current always takes a constant value given by control desired value A ± control range Δ, and therefore, it is possible to increase the inspection precision of the object under inspection 12.

As described above, with the x-ray generating apparatus 14 provided in the x-ray inspection apparatus 10 according to the first embodiment, the particle accelerator 20 creates a charged particle beam for generating x-rays having a plurality of different energies, and x-rays are emitted by irradiating the target 22 with the charged particle beam. Then, by irradiating the target 22 with the charged particle beam, the single-energy control devices 40 control the particle accelerator 20 for each of the x-rays having different energies based on the x-ray radiation level per unit target current obtained from the measured value of the current flowing in the target 22 and the measured value of the x-ray radiation level emitted from the target 22.

Therefore, the x-ray generating apparatus 14 according to the first embodiment emits x-rays having a plurality of different energies, while suppressing variations in the energies of the created x-rays.

### Second Embodiment

A second embodiment of the present invention will be described below.

The configuration of an x-ray inspection apparatus 10 according to the second embodiment is similar to the configuration of the x-ray inspection apparatus 10 according to the first embodiment shown in Fig. 1, and therefore a description thereof is omitted; however, the x-ray inspection apparatus 10 according to the second embodiment does not actuate the x-ray shutter 28 or is not provided with the x-ray shutter 28.

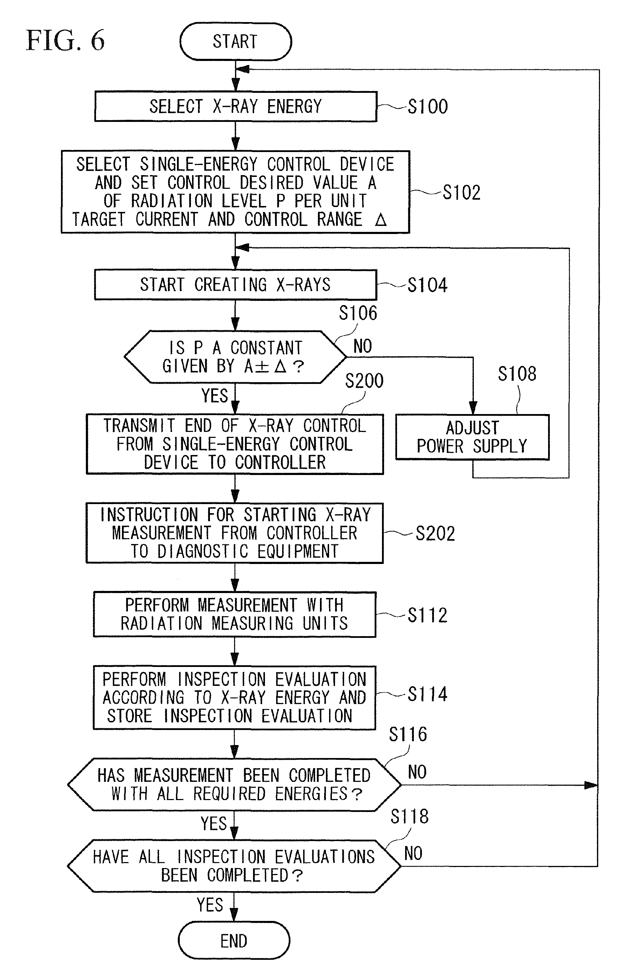

Fig. 6 is a flowchart (control algorithm) showing the flow of x-ray inspection processing according to the second embodiment. Steps in Fig. 6 that are identical to those in Fig. 2 are assigned the same reference symbols as those in Fig. 2, and a description thereof is partially or entirely omitted.

In step 106, it is determined whether or not the x-ray radiation level P per unit target current is a constant value given by control desired value A ± control range Δ, and when an affirmative determination is made, the process proceeds to step 200.

In step 200, a control completion signal indicating that x-ray control is completed is sent from the single-energy control devices 40 to the controller 44.

Next, in step 202, a start instruction signal for instructing the start of x-ray measurement is sent from the controller 44 to the diagnostic equipment 42, and the process proceeds to step 112.

In step 112, measurement is performed by the radiation measuring units 16.

As described above, in the second embodiment, when the x-ray radiation level P per unit target current takes a constant value given by control desired value A ± control range Δ, the start instruction signal instructing the start of x-ray measurement is sent from the controller 44 to the diagnostic equipment 42; therefore, the x-ray shutter 28, which blocks x-rays radiated towards the object under inspection 12, is not necessary.

### Third Embodiment

A third embodiment of the present invention will be described below.

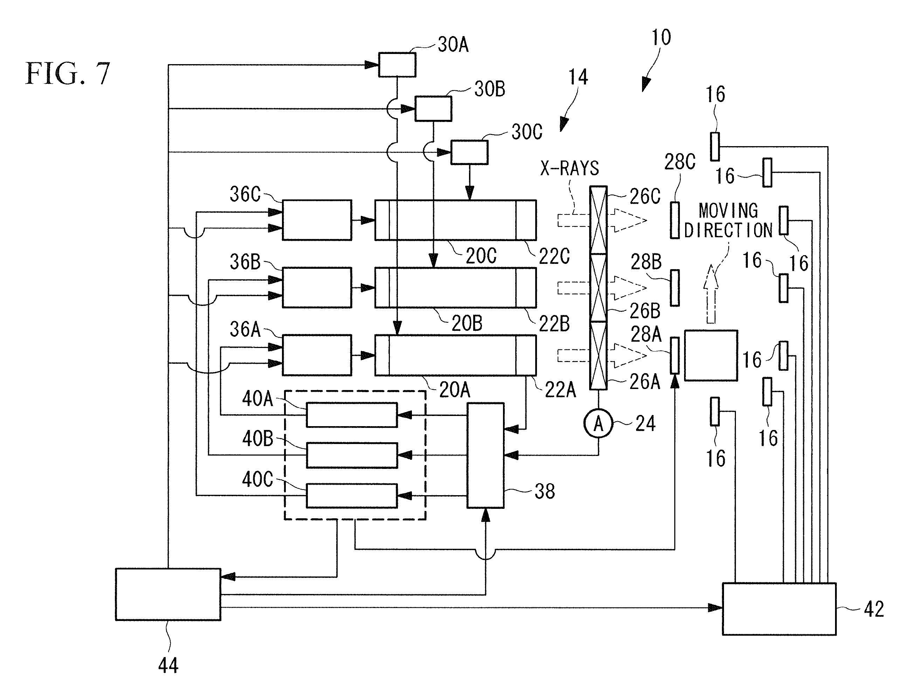

Fig. 7 shows the configuration of an x-ray inspection apparatus according to the third embodiment. Parts in Fig. 7 that are identical to those in Fig. 1 are assigned the same reference symbols as those in Fig. 1, and a description thereof is omitted.

The x-ray inspection apparatus 10 according to the third embodiment includes particle accelerators 20A, 20B, and 20C for each x-ray energy, and is also provided with accelerator-tube power supply units 30A, 30B, and 30C and particle-beam-source power supplies 36A, 36B, and 36C for the corresponding particle accelerators 20A, 20B, and 20C, as well as targets 22A, 22B, and 22C and X-ray shutters 28A, 28B, and 28C.

With this arrangement, it is not necessary to adjust the accelerator-tube power supply 30 and the particle-beam-source power supply 36 each time the x-ray energy is to be switched.

Also, since the particle accelerators 20A, 20B, and 20C always create charged particle beams, x-rays having a plurality of different energies are ejected. Therefore, by opening and closing the x-ray shutters 28A, 28B, and 28C for each x-ray energy, it is possible to selectively irradiate the moving object under inspection 12 with x-rays, and it is thus possible to shorten the inspection time of the object under inspection 12.

The present invention has been described above using the above-described individual embodiments; however, the technical scope of the present invention is not limited to the scope described in the above embodiments. Various changes or improvements that do not depart from the scope of the invention can be made to the above embodiments, and forms including such modifications or improvements are also encompassed within the technical scope of the present invention.

For example, in the embodiments described above, although forms that are capable of switching among three x-ray energies have been described, the present invention is not limited thereto; forms that are capable of switching among two x-ray energies or four or more x-ray energies are also permissible.

Furthermore, although forms provided with a single-energy control device 40 for each x-ray energy have been described in the above embodiments, the present invention is not limited thereto; a form in which one energy control device is provided for a plurality of energies and the energy control device adjusts the electrical power output from the accelerator-tube power supply 30 and the particle-beam-source power supply 36 according to each of the x-rays having a plurality of different energies is also permissible.

Although a form in which the radiation-level measuring unit 26 is of the transmissive type has been described in the above embodiments, the present invention is not limited thereto; a form in which the radiation-level measuring unit 26 is of the non-transmissive type and also functions as the x-ray shutter 28 is permissible.

Although a form in which a linear accelerator is used as the particle accelerator has been described in the above embodiments, the present invention is not limited thereto; a form in which another particle accelerator, such as an electrostatic accelerator or a circular accelerator, is used as the particle accelerator is also permissible.

In addition, the particle accelerator may be provided with an energy discriminator that discriminates the energy of the accelerated charged particle beam. With this arrangement, the energy of the charged particle beam that irradiates the target 22 has high precision, and therefore, it is possible to increase the energy precision of the created x-rays.

The flow of x-ray inspection processing described in the above embodiments is also merely an example; unnecessary steps may be eliminated, new steps may be added, or the processing sequence may be reordered, so long as such changes do not depart from the scope of the present invention.

For example, when the x-ray shutter 28 is opened to irradiate the object under inspection 12 with x-rays, if the x-ray radiation level P per unit target current deviates from control desired value A ± control range Δ, a step in which irradiation of the object under inspection 12 with x-rays is stopped by closing the x-ray shutter 28 may be added to the x-ray inspection processing.

### {Reference Signs List}

- 10: x-ray inspection apparatus
- 12: object under inspection
- 14: x-ray generating apparatus
- 16: x-ray measuring unit
- 20: particle accelerator
- 22: target
- 24: current measuring unit
- 26: radiation-level measuring unit
- 28: x-ray shutter
- 40: single-energy control device

## Claims

1. An x-ray generating apparatus for irradiating an object under inspection with x-rays, comprising:
a particle accelerator that creates a charged particle beam for generating x-rays having a plurality of different energies;
a target that emits x-rays by being irradiated with the charged particle beam;
a current measuring means for measuring a current flowing in the target when the target is irradiated with the charged particle beam;
a radiation-level measuring means for measuring a radiation level of the x-rays emitted from the target when the target is irradiated with the charged particle beam; and
a control means for controlling the particle accelerator for each of the x-rays having different energies, based on an x-ray radiation level per unit current obtained from a measurement value measured by the current measuring means and a measurement value measured by the radiation-level measuring means.

2. An x-ray generating apparatus according to claim 1, wherein the object under inspection is repeatedly irradiated with the x-rays having a plurality of different energies periodically at prescribed time intervals.

3. An x-ray generating apparatus according to claim 1 or claim 2, further comprising:
an openable and closable shutter that blocks x-rays emitted from the target and radiated towards the object under inspection,
wherein the shutter is opened when the x-ray radiation level per unit current falls within a prescribed range including a desired value that is set in advance.

4. An x-ray generating apparatus according to one of claims 1 to 3, wherein when the x-ray radiation level per unit current falls within a prescribed range including a desired value that is set in advance, inspection of the object under inspection is performed using the x-rays.

5. An x-ray generating apparatus according to claim 3 or claim 4, wherein the desired value and the prescribed range can be set for each of the x-rays having a plurality of different energies.

6. An x-ray generating apparatus according to one of claims 3 to 5, wherein the desired value, the prescribed range, and a period, in a case where the object under inspection is repeatedly inspected, can be set according to the object under inspection.

7. An x-ray generating apparatus according to one of claims 1 to 6, wherein the control device feedback-controls the particle accelerator on the basis of the x-ray radiation level per unit current.

8. An x-ray generating apparatus according to claim 7, wherein the feedback control is performed continuously or at prescribed time intervals.

9. An x-ray generating apparatus according to one of claims 1 to 8, wherein a plurality of the control devices are provided in correspondence with the x-rays having a plurality of different energies and are switched according to the x-ray energy.

10. A control method for an x-ray generating apparatus that irradiates an object under inspection with x-rays, provided with a particle accelerator that creates a charged particle beam for generating x-rays having a plurality of different energies and a target that emits x-rays when irradiated with the charged particle beam, the control method comprising:
controlling the particle accelerator for each of the x-rays having different energies on the basis of an x-ray radiation level per unit current, obtained from a measured value of the current flowing in the target and a measured value of the radiation level of x-rays emitted from the target, when the target is irradiated with the charged particle beam.
